# EUROPEAN PATENT APPLICATION

(11) **EP 3 780 637 A1**
(43) Date of publication of application: **17.02.2021**
(21) Application number: 19774543.3
(22) Date of filing: 24.01.2019
(51) Int. Cl.: H04N 21/4385

(54) **WEBPAGE VIDEO PLAYBACK METHOD AND APPARATUS, ELECTRONIC DEVICE AND STORAGE MEDIUM**

(30) Priority: 30.03.2018 CN 201810276875
(71) Applicant: ZTE Corporation, shenzhen Guangdong 518057 (CN)
(72) Inventor: CHE, Gangjian, Shenzhen, Guangdong 518057 (CN); GUO, Teng, Shenzhen, Guangdong 518057 (CN)
(74) Representative: WBH Wachenhausen Patentanwälte PartG mbB
(86) International application number: PCT/CN2019/073018
(87) International publication number: WO 2019/184572

(57) **Abstract**

Embodiments of the present application provide a webpage video playing method and device, an electronic apparatus and a storage medium. The webpage video playing method applied to a cloud server includes: acquiring a video parameter of a video on a webpage; and sending the video parameter to a cloud terminal, wherein the video parameter is used for the cloud terminal to decode and play the video.

## Description

### CROSS-REFERENCE TO RELATED APPLICATION

The present application is based on Chinese patent application No.201810276875.2, filed on Mar. 30, 2018, and claims priority to this Chinese patent application, the content of which is incorporated herein by reference in its entirety.

### TECHNICAL FIELD

The present application relates to, but is not limited to, cloud computing technology in the field of network technology, and in particular to a webpage video playing method and device, an electronic apparatus and a storage medium.

### BACKGROUND

Standard Generalized Markup Language (HTML5) was put forward during the fifth major revision. HTML allows a video to be directly embedded in a webpage and played on the webpage. Before the advent of HTML5, if there is a need to play a video on the webpage, the only way is to add a Flash plug-in to the webpage, which can request and decode the video, so that the video can be played by embedding the Flash plug-in in the webpage. However, there is actually no video directly embedded in the webpage.

In the field of cloud computing, cloud desktop technology is proposed, which includes a cloud server and a cloud terminal running a cloud desktop; clients accessing to the cloud server are allowed in the cloud terminal. The direct display of the webpage using cloud desktop technology sometimes results in the cloud server consuming a lot of resources such as Centre Processer Unit (CPU) and memory, thereby leading to a high load rate and slow response speed of the cloud server, especially when there is a video embedded directly in the webpage.

### SUMMARY

In view of this, embodiments of the present application are intended to provide a webpage video playing method and device, an electronic apparatus and a storage medium.

The technical scheme of the present application is realized as follows.

In a first aspect, an embodiment of the present application provides a webpage video playing method applied to a cloud server, which includes:
acquiring a video parameter of a video on a webpage; and
sending the video parameter to a cloud terminal, wherein the video parameter is used for the cloud terminal to decode and play the video.

In a second aspect, an embodiment of the present application provides a webpage video playing method applied to a cloud terminal, comprising:
receiving a video parameter sent by a cloud server;
decoding a video on a webpage in a cloud desktop based on the video parameter; and
playing the decoded video at the cloud terminal.

In a third aspect, an embodiment of the present application provides a webpage video playing device applied to a cloud server, which includes:
an acquisition module configured to acquire a video parameter of a video on a webpage;
a sending module configured to send the video parameter to a cloud terminal, wherein the video parameter is used for the cloud terminal to decode and play the video.

In a fourth aspect, an embodiment of the present application provides a webpage video playing device applied to a cloud terminal, which includes:
a receiving module configured to receive a video parameter from a cloud server;
a decoding module configured to decode a video on a webpage in a cloud desktop based on the video parameter; and
a playing module configured to play the decoded video at the cloud terminal.

In a fifth aspect, an embodiment of the present application provides an electronic apparatus, which includes: a transceiver, a memory, a processor, and a computer program which is stored in the memory and executed by the processor, wherein
the processor is connected to the transceiver and the memory for performing the webpage video playing method provided in one or more technical schemes mentioned above by executing the computer program.

In a sixth aspect, an embodiment of the present application provides a computer storage medium storing a computer program, wherein the webpage video playing provided in one or more technical schemes mentioned above is performed after the computer program is executed.

According to the webpage video playing method and device, the electronic apparatus and the storage medium provided by the embodiments of the present application, when the cloud server is used to run the cloud desktop of the cloud terminal, in order to reduce the problems that the decoding of the webpage self-contained video which is required to be de-encapsulated and decoded by the browser itself consumes lots of computing resources and/or storage resources of the cloud server, which leads to large resource consumption, high load rate and slow response speed caused by the high load rate of the cloud server, the cloud server may acquire video parameters of the video on the webpage and send the video parameters to the cloud terminal for decoding and playing the video by the cloud terminal itself, so as to decode the video on the webpage by using computing resources and/or storage resources of the cloud terminal, thereby solving the problems of high resource overhead, high load rate and slow response speed caused by decoding the video on the webpage, reducing resource overhead and load rate of the cloud server, and enabling the cloud server to have more resources to improve its response speed; furthermore, the problems of long delay and poor video playing effect due to slow decoding of the video on the webpage in the cloud server are reduced, and the fluency for playing the video in the cloud desktop is improved.

### BRIEF DESCRIPTION OF DRAWINGS

FIG. 1 is a schematic flowchart of a first webpage video playing method provided by an embodiment of the present application;
FIG. 2 is a schematic diagram of loading a de-encapsulation component with a video decoding function provided by the embodiment of the present application;
FIG. 3 is a display schematic diagram of playing pseudo video frame provided by the embodiment of the present application;
FIG. 4 is a playing schematic diagram of a cloud terminal displaying a video in a webpage on top of played pseudo video frame provided by an embodiment of the present application;
FIG. 5 is a schematic flowchart of a second webpage video playing method provided by the embodiment of the present application;
FIG. 6 is a schematic flowchart of a third webpage video playing method provided by the embodiment of the present application;
FIG. 7 is a schematic flowchart of a fourth webpage video playing method provided by the embodiment of the present application;
FIG. 8 is a schematic structural diagram of a first webpage video playing device provided by the embodiment of the present application;
FIG. 9 is a schematic structural diagram of a second webpage video playing device provided by the embodiment of the present application;
FIG. 10 is a schematic structural diagram of a cloud server or cloud terminal provided by the embodiment of the present application;
FIG. 11 is a schematic structural diagram of a video playing system provided by the embodiment;
FIG. 12 is a schematic flowchart of a fifth webpage video playing method provided by the embodiment of the present application;
FIG. 13 is a schematic flowchart of a sixth webpage video playing method provided by the embodiment of the present application;
FIG. 14 is a schematic flowchart of a seventh webpage video playing method provided by the embodiment of the present application;
FIG. 15 is a schematic flowchart of an eighth webpage video playing method provided by the embodiment of the present application; and
FIG. 16 is a schematic flowchart of a ninth webpage video playing method provided by the embodiment of the present application.

### DETAILED DESCRIPTION

The technical scheme of the present application will be further described in detail with reference to the accompanying drawings by embodiments.

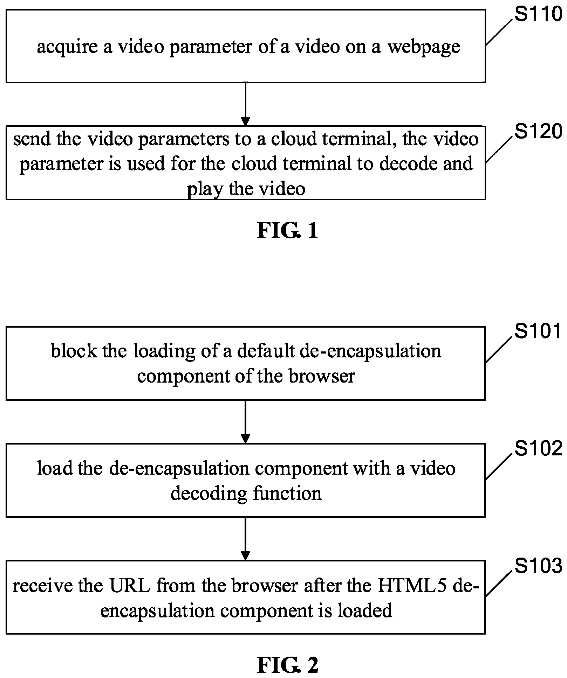

As shown in FIG. 1, a webpage video playing method applied to a server is provided in this embodiment, which includes.

At S110, a video parameter of a video on a webpage are acquired.

At S 120, the video parameter is sent to a cloud terminal, the video parameter being used for the cloud terminal to decode and play the video.

In this embodiment, the cloud server is a server arranged on a network side, which can execute the running technology of a cloud desktop, and the cloud desktop may be run by a virtual machine in the cloud server.

The cloud terminal may include a fixed terminal and/or a mobile terminal. The fixed terminal may be a personal computer, a fixed projector, etc. The mobile terminal may include mobile electronic apparatuses such as mobile phones, tablet computers or wearable devices.

The video parameter of the video on the webpage acquired in S 110 may include at least one of the following:
a URL of the video;
file parameters of the video;
video control information; and
stream parameters of the video.

Based on the URL, video content of the corresponding video may be requested from the video server where the video is stored. The video content may include one or more of image content, audio content and subtitle content. If the video is a silent video, the video content include only the image content, or only the image content and the subtitle content. If the video is an audio video, the video content at least includes the image content and the audio content. If the video is a video with subtitles, the video content will include the subtitle content, otherwise it will not include the subtitle content.

The file parameters of the video may include one or more of file format, file size, creation information and modification information of the video file corresponding to the video. The file format may be a video file format such as an mp4 format. The file size is used to indicate the data size such as the number of bytes included in the video file. The creation information of the file may include information related to the creation of the video file, such as a creation time and a creator of the file. The modification information of the file may include information related to the video file, such as a modification time and a modifier of the file.

The stream parameters may include the number of streams, playing duration and other information. The number of streams is related to the types of video content. For example, if the video content includes the image content, the audio content and the subtitle content, the number of streams is 3, and if the video content includes the image content and the audio content, the number of streams is 2. The playing duration is the length of time needed to play the video at a standard playing speed.

The video control information may include a control command code for playing the video. If pause, fast forward, rewind, forward and play and other user inputs are detected, the video control information will execute the control command code to achieve a series of operations such as pause, fast forward, rewind, forward and play during video playing, to facilitate the user to control the video playing.

In this embodiment of the present application, the video parameters are divided into a first video parameter and a second video parameter. The first video parameter includes no URL of the video, while the second video parameter may include the URL of the video.

In this embodiment, the cloud server will acquire the video parameters of the video on the webpage and send the video parameters to the cloud terminal, and the cloud terminal will decode and output the video on the webpage by itself. Obviously, the cloud server is no longer required to decode the video on the webpage, so as to reduce the consumption of various computing resources and memory resources for decoding the video on the webpage, thus reducing the load of the cloud server, thereby reducing the load rate of the cloud server and reducing the playback delay and other problems caused by the high load rate of the cloud server.

In some embodiments, the S110 may include.

A Uniform Resource Locator (URL) of the video on the webpage is received from a browser by using a de-encapsulation component with a video decoding function. For example, the URL of the video on the webpage is received from the browser by using a Standard Generalized Markup Language (HTML5) de-encapsulation component.

The URL is parsed to obtain the video parameters. If the video content of the video are requested by the cloud server, the HTML5 de-encapsulation component will also request the video content from the cloud server based on the URL. If the video content is requested by the cloud terminal itself, the cloud server will send the URL to the cloud terminal, so that the cloud terminal can request the video content from the video server based on the URL.

In this embodiment, a specific HTML5 de-encapsulation component (Source) may be loaded in the cloud server, and a specific interface is established between the HTML5 de-encapsulation component and the browser (e.g., IE). The interface may be an Application Programming Interface (API) which may request the URL of the video on the current webpage from IE, or the IE will automatically send the URL to the HTML5 de-encapsulation component. The browser will decode the webpage while loading the webpage, so that a video tag can be automatically parsed to obtain the URL. In this embodiment, the HTML5 de-encapsulation component receives the URL from the browser, instead of acquiring the URL by using a script language (e.g., Java Scrip (JS)) of the current webpage to traverse the video tag <video> on the webpage. If the script language is used to traverse webpages to read the video tag, it will lead to a failure to read the video tag, so webpage providers may set the video tag in different ways, or hide the tag in some cases, thus improving the universality of acquiring videos on webpages and improving the ability and universality of acquiring the URL of videos on webpages.

In some embodiments, as shown in FIG. 2, the method further includes:
At S 101, the loading of a default de-encapsulation component of the browser is blocked.
At S102, the de-encapsulation component with a video decoding function, e.g., the HTML5 de-encapsulation component or a specially developed de-encapsulation component with a video decoding function, is loaded.
At S103, the URL is received from the browser after the HTML5 de-encapsulation component is loaded.

In this embodiment, a monitoring component is provided to monitor the communication between the browser and a registry. For example, an interface (i.e., the registry interface) between the browser and the registry for information interaction is detected to determine whether a webpage currently opened by the browser contains a video directly, and the video file is required to be de-encapsulated and decoded by calling the de-encapsulation component for the video. The monitoring component may be of many types, not limited to a specific one. For example, the monitoring component may be a Browser Helper Object (BHO) component which monitors the registry interface, and the registry interface may be an interface between a browser and the registry. If a video is directly embedded in a webpage currently loaded by the browser, a first read request will be sent through the registry interface. The first read request is used to read registry information of the default de-encapsulation component of the browser from the registry, after which the default de-encapsulation component may be loaded. In this embodiment, the BHO component may be a component set between the browser and the registry, and is required for the browser to send the first read request to the registry. After receiving the first read request from the browser, the BHO component will parse the first read request. If the information contained in the first read request indicates that the browser reads the registry information of the default de-encapsulation component, the monitoring component such as the BHO component may perform the following operations to block the loading of the default de-encapsulation component of the browser and trigger the loading of HTML5 de-encapsulation component. The following options are available:
Method 1: If the first read request of the registry interface to read first registry information of the browser's default de-encapsulation component is monitored, the BHO component will directly intercept the first read request, making it impossible for the first read request to reach the registry, and will trigger the cloud server or directly load the HTML5 de-encapsulation component, thus enabling the replacement of the browser's default de-encapsulation component by the HTML5 de-encapsulation component.
Method 2: If the first read request of the registry interface to read the first registry information is monitored, it is modified into a second read request which contains identification information for reading second registry information. The identification information may be a table identification of the registry containing the second registry information, or indication information of a table row or column of the registry containing the second registry information that can locate the second registry information.
Method 3: If the first read request of the registry interface to read the first registry information is monitored, the registry may be modified to modify the first registry information into the second registry information, so that the second registry information read directly by the browser from the registry interface will enable the loading of the HTML5 de-encapsulation component based on the second registry information and block the loading of the browser's default de-encapsulation component. In this method, the operation of modifying the registry may be a temporary operation. After the second registry information is returned to the browser, the original contents of the registry may be restored, i.e., the second registry information is modified into the first registry information.

The loading of the HTML5 de-encapsulation component includes a step of: initializing the HTML5 de-encapsulation component. The initialization may include the following steps of: running a running code of the HTML5 de-encapsulation component, and setting up the specific interface for information interaction with the browser, thereby facilitating the HTML5 de-encapsulation component to acquire the URL and other video parameters from the browser.

In this embodiment, the browser is a browser running on the cloud desktop in the cloud server. Since the loading of the default de-encapsulation component of the browser is blocked in this embodiment, it is possible to transfer a video decoding task in the browser to the cloud terminal, decode the video by using the cloud terminal's own resources, and display the video in the cloud desktop of the cloud terminal.

There are many ways to block the default de-encapsulation component, and the specific implementation is not limited to any of the above.

In some embodiments, the method further includes:
Pseudo video frame is played in the cloud desktop of the cloud server, with the pseudo video frame being a frame in which no video content is loaded, and such frame with no video content loaded may be referred to as blank frame.

The pseudo video frames may include pseudo image frames and pseudo audio frames.

Since the video decoding and playing are implemented by the cloud terminal itself, the cloud desktop in the cloud server may make the video playing pause, to ensure that the cloud desktop stays in sync with the cloud terminal. In this embodiment, the pseudo video frames are played in the cloud desktop of the cloud server. The pseudo video frame is a blank frame in which no content is recorded. The blank frames are played on a black screen with no content displayed in a display window and no sound output from an audio component. As no data is loaded in the pseudo video frames, when the cloud server plays and switches the pseudo video frames, the data read each time is the same and the data refreshed each time is the same, therefore, the cloud server consumes fewer resources, thus reducing the resource consumption of the cloud server.

In this embodiment, the blank frame may be a contentless video frame without any image content, audio content or subtitle content.

In this embodiment, the playing of the pseudo video frames stays in sync with that of the real video frames in the cloud terminal, so that the cloud server can learn about the current running state of the cloud desktop. For example, this synchronization can be embodied in that if the current cloud terminal plays an X^{th} image frame of the video, an X^{th} pseudo image frame should be played in the cloud server.

In some embodiments, the method further includes:
a playing object is created based on the video parameters; and
the pseudo video frame is constructed based on the playing object.

In this embodiment, the play object created may be a data type object. The playing object defines the data format and other information of the pseudo image frame.

Therefore, in this embodiment, the pseudo video frame may be constructed based on the playing object. For example, the playing object is constructed based on the stream parameters.

In some embodiments, constructing the pseudo video frames based on the playing object includes:
an image object in a predetermined image format is created;
an audio object in a predetermined audio format is created;
constructing the pseudo video frame based on the playing object includes:
   the pseudo image frame are constructed based on the image object;
   the pseudo audio frames are constructed based on the audio object;
constructing the pseudo video frame based on the playing object includes:
   the image frame is rendered and the pseudo image frame is displayed; and
   the pseudo audio frame is rendered and played. In this embodiment, the image object in a predetermined image format and the audio object in a predetermined audio format are both rendered directly into a graphic format without decoding, so the playing of the pseudo video frame in the cloud desktop of the server may be realized by directly rendering the image frame and displaying the pseudo audio frame, and rendering and playing the pseudo audio frame.

In this embodiment, the image object in a predetermined image format and the audio object in a predetermined audio format. In this embodiment, the predetermined image format and the predetermined audio format may be a format type that can be output without decoding but after being directly rendered. For example, the predetermined image format may be a Red Green Blue (RGB) format. The predetermined audio format may be a Pulse Code Modulation (PCM) format. In this way, when the pseudo image frames are played in the cloud server, the decoding process can be directly skipped to render images and audios directly and output the pseudo image frames.

In some embodiments, the method further includes:
area parameters of a first display area playing the pseudo video frames in the cloud desktop are acquired; and
the area parameters are sent to the cloud terminal to be used by the cloud terminal to play the video in a second display area corresponding to the first display area, and the second display area overlays the first display area.

In this embodiment, the area parameters may include:
location parameters which may be configured to describe display positions of the pseudo image frames, e.g., when the first display area is a rectangle, the location parameters of four vertexes of the rectangle, and
location parameters and size parameters, for example, the location parameter may be the location parameter of a vertex of the first display area, and the size parameters may be configured to indicate information about a width and height of the first display area.

In summary, the area parameters can determine information about the location of the first display area in the cloud desktop for the cloud terminal. In this way, the cloud terminal will, based on the area parameters, play videos in the second display area overlaying the first display area on a display screen of the cloud terminal, so as to avoid the cloud server from synchronizing the cloud desktop to the cloud terminal, thereby ensuring the playing effect of the cloud terminal. If the second display area fails to overlay the first display area, users may see a black screen effect of playing pseudo video images on the cloud desktop.

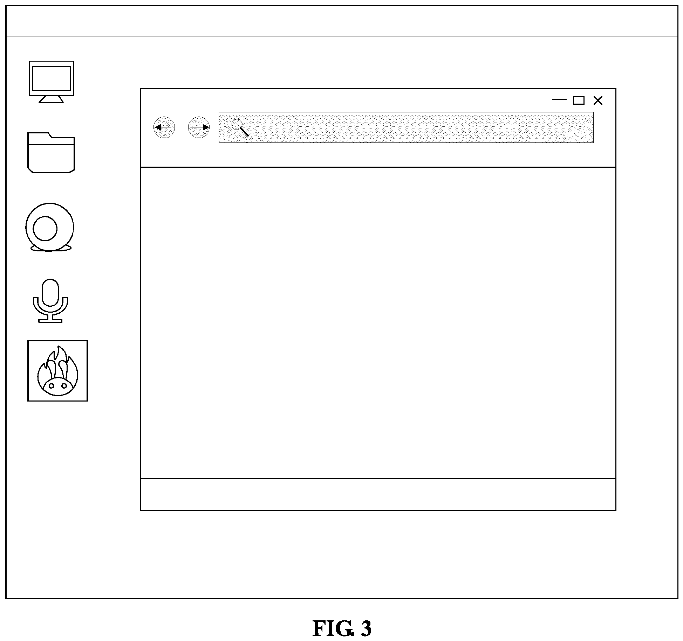

FIG. 3 is a schematic view showing a displaying effect after the cloud terminal downloads the cloud desktop directly from the cloud server. Obviously, there is no content displayed in the video window in the middle of the cloud desktop because of the blank video frame playing on a cloud server side.

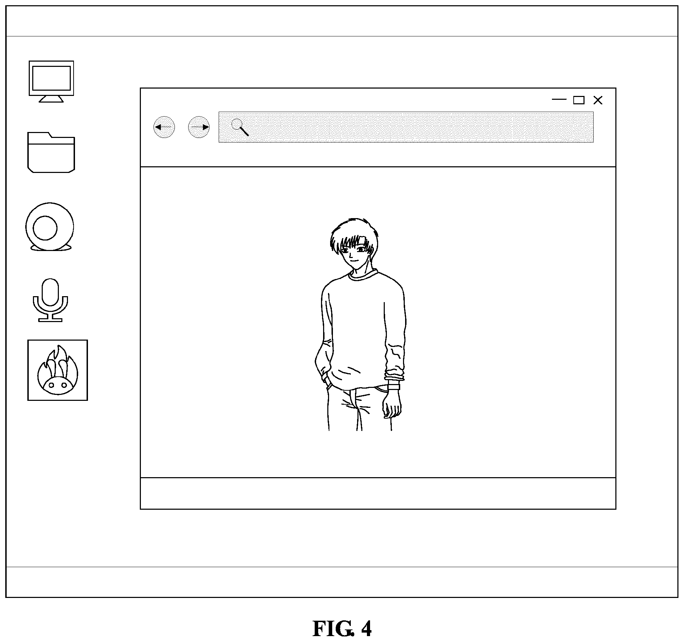

FIG. 4 is a schematic diagram showing an effect that the cloud terminal decodes the video on the webpage by itself based on the video parameters and displays the video in the video window on the webpage after downloading the content displayed on the cloud desktop as shown in FIG. 3 from the cloud server.

In some embodiments, the method further includes:
playing progress information reported by the cloud terminal is received; and
the playing progress of the pseudo video frames in the cloud desktop is controlled based on the playing progress information.

In this embodiment, the cloud terminal decodes and plays the video by itself, and there is no need to synchronize the user's commands to operate the cloud terminal to control the video playing to the cloud desktop. The cloud terminal will directly report the playing progress information, while the cloud server will control the playing progress of the pseudo video based on the playing progress information of the real video reported by the cloud terminal, so as to make the playing progress of the video with real frames in the cloud terminal consistent with that of the pseudo video in the cloud server.

For example, if the cloud terminal requests the video content directly from the video server based on the URL, and decodes and plays the video by itself, the cloud server requires the cloud terminal to report the playing progress information. In other embodiments, if the video content is directly sent down to the cloud terminal from the cloud server, the cloud server may determine the playing progress information of the video in the cloud terminal based on the request of the cloud terminal for the video content from the cloud server, so that it is not necessary to request the playing progress information from the cloud terminal additionally. In yet further embodiments, when the cloud terminal requests the video content from the cloud server, the request for video content contains the playing progress information, so that the request for playing progress information and the request for video content of the cloud terminal can be implemented at the same time.

In some embodiments, the video parameter sent to the terminal from the cloud server is a first video parameter, and the method further includes:
the video content of the video on the webpage are acquired, and
the video content is sent to the cloud terminal.

In this embodiment, the video content is first acquired by the cloud server, then stored in a caching queue of the cloud server, and then sent to the cloud terminal one by one. For example, the video content is requested from the video server based on the URL acquired by the HTML5 de-encapsulation component, and then cached.

For example, the cloud server may establish a Transmission Control Protocol (TCP) connection with the cloud terminal, and send the video content to the cloud terminal through the TCP connection, thereby ensuring highly reliable transmission of the video content.

In other embodiments, the method further includes:
The video parameters are second video parameters containing the URL of the video, and the URL is used for the cloud terminal to request the video content of the video from the video server of the video. If the video parameters directly received by the cloud terminal from the cloud server are the second video parameters containing the URL, the cloud terminal will give URL directly to request the video from the video server.

In some embodiments, the method further includes:
whether to perform the transfer of video decoding is determined based on a predetermined strategy.

S120 may include:
the video parameters are sent to the cloud terminal in response to determining to perform the transfer of video decoding based on the predetermined strategy.

There are a number of methods to determine whether to perform the transfer of video decoding based on the predetermined strategy, several of which are provided below.

### Method 1:

Based on the predetermined strategy, whether the video parameters meet the conditions for performing the transfer of video decoding is determined.

### Method 2:

Based on the predetermined strategy, whether the decoding ability of the cloud terminal meets the conditions for performing the transfer of video decoding is determined.

### Method 3:

Based on the predetermined strategy, whether the video parameters and the decoding ability of the cloud terminal meet the conditions for performing the transfer of video decoding is determined.

The video parameters and the decoding ability parameters of the cloud terminal can be used as reference parameters for determining whether the conditions for performing the transfer of video decoding are met. The decoding ability parameter may be an indicative parameter of the standard decoding ability of the cloud terminal. For example, the decoding ability parameters may be used to indicate whether the cloud terminal supports a decoding type required by the video, and the decoding type may include hardware decoding and software decoding. The decoding ability parameter may be reported by the cloud terminal. For example, the cloud terminal may directly report its own decoding ability parameters, or may report its own terminal parameters such as terminal type, and the cloud server queries the decoding ability parameters of the cloud terminal based on the terminal parameters.

In some embodiments, a correspondence between the reference parameters and decoding modes is configured in the predetermined strategy, and the decoding modes include a cloud terminal decoding mode and a cloud server decoding mode. Therefore, the decoding mode may be determined directly with the matching of the reference parameters, and if the current decoding mode is to decode by the cloud terminal, it is confirmed that the condition for performing the transfer of video decoding is met.

For example, two correspondences between the decoding modes and the video parameters are noted in the predetermined strategy, so the decoding mode may be determined by matching the currently obtained video parameters with the video parameters in the predetermined strategy. If it is determined to perform the decoding by the cloud terminal, the video parameters will be sent to the cloud terminal instead of being decoded directly by the cloud server and played in the cloud desktop. The cloud terminal is only a display interface staying in sync with the cloud desktop. If it is determined to perform the decoding by the cloud terminal, the video parameters will be sent to the cloud terminal which decodes and outputs the video by itself.

In some embodiments, determining whether to perform a transfer of video decoding based on the predetermined strategy and the video parameters includes at least one of steps as follows:
whether the URL of the video is a preset URL or not is determined, and if so, it is determined to perform the transfer of video decoding, and
whether a playing duration of the video reaches a preset playing duration is determined, and if so, it is determined to perform the transfer of video decoding.

For example, the URL of the video to be decoded by the cloud terminal is configured in the cloud server, so the URL of the video on the current webpage may be matched with the URL in a profile. If the matching is successful, the decoding is to be performed by the cloud terminal, otherwise the decoding is to be performed by the cloud server.

In some embodiments, when the current video is a small video such as an advertisement with a very short broadcast duration on the webpage, the load of the cloud server will not be reduced even through the task of video decoding is transferred, so the cloud server may perform the decoding itself. Therefore, it may also be determined based on the duration. If the duration for playing the video at a standard speed as indicated in the stream parameters is not less than a preset duration such as 10 mins, 15 mins, 20 mins and 45 mins, the cloud terminal will share the task of the video interface to reduce the load of the cloud server.

In this embodiment, the cloud server directly sends the URL to the cloud terminal, and the cloud terminal may directly request the video content from the cloud server. At this point, it is not necessary for the cloud server to request the video content from the cloud server, thereby reducing bandwidths consumed by the cloud server for receiving and sending the video content, reducing the cookies consumed by the cloud server for caching the video content, and further reducing the resource consumption of the cloud server.

In some embodiments, if the video content of the video is directly requested by the cloud terminal from the video server, the cloud server will also send predetermined information to the cloud server, which contains authentication information required by the cloud terminal to acquire the video from the video server. The authentication information may be an identifier for playing the video and a password corresponding to the identifier, for example, a user identifier of a video VIP and a password set by a user. The user identifier may be a user name, etc. The predetermined information may be cookie information or session information of the cloud server. If the cloud server requests a video from the video server, the authentication information may be stored in the cookie information. Therefore, in this embodiment, the cloud server may send its cookie information to the cloud terminal, so as to send the authentication information. In yet further embodiments, if the cloud server establishes a session with the video server and requests the video content and/or video parameters of the video through the session, the authentication information may also be stored in the session information at this point. Therefore, in this embodiment, the cloud terminal may also acquire the authentication information by sending the session information.

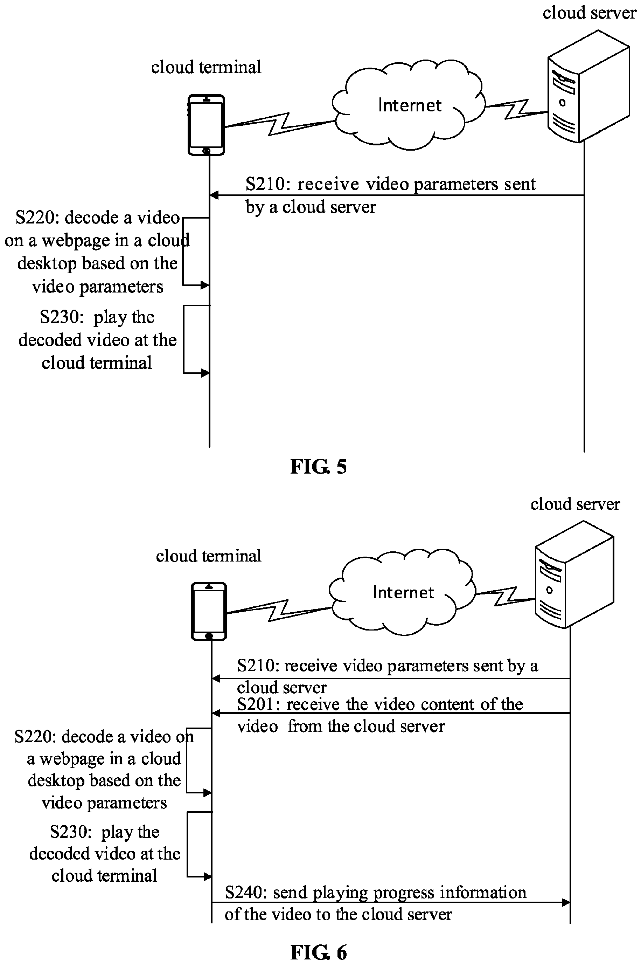

As shown in FIG. 5, a video playing method applied to a cloud terminal is provided in this embodiment, which includes:
At S210, video parameters sent by a cloud server are received;
At S220, a video on a webpage in a cloud desktop is decoded based on the video parameters; and
At S230, the decoded video is played at the cloud terminal.

In this embodiment, the cloud terminal will receive the video parameters from the cloud server, and use the video parameters to decode the video on the webpage displayed in the cloud desktop by itself, without occupying the resources of the cloud server for video decoding, thereby transferring the load of the cloud server and reducing the problem of long video playing delay caused by the high load rate of the cloud server.

In this embodiment, the details of the video parameters may be referred to the above embodiment, and will not be repeated herein.

In S230, video image frames are displayed on the cloud desktop displayed at the cloud terminal, and the audio frames are output.

In this embodiment, the cloud terminal synchronizes with the cloud desktop from the cloud server and displays the cloud desktop locally. In this embodiment, after the cloud terminal decodes the video by using its own resources, the video will be displayed in the display area of the locally displayed cloud desktop. The location of the display area may be communicated to the cloud terminal by the cloud server, or the cloud terminal may parse the cloud desktop received from the cloud server itself to determine the display area. For example, when the cloud server plays pseudo image frames, a video window, which show a large continuous black area due to playing the pseudo video frames, will be opened on the cloud desktop, so the cloud terminal may parse and synchronize screenshots of the cloud desktop, locate the continuously distributed black area as the display area, and overlaying the image frames of the video decoded by itself on the display area for output, thus showing a video playing effect of playing the video on the webpage in the cloud desktop.

In some embodiments, as shown in FIG. 6, the method further includes:
At S201, the video content of the video are received from the cloud server. The cloud server requests the video content from the video server based on the URL of the video, caches the video content in the cloud server, and then sends the video content to the cloud terminal based on the request of the cloud terminal or by itself. The video content may include at least one of image content, audio content and subtitle content mentioned above.

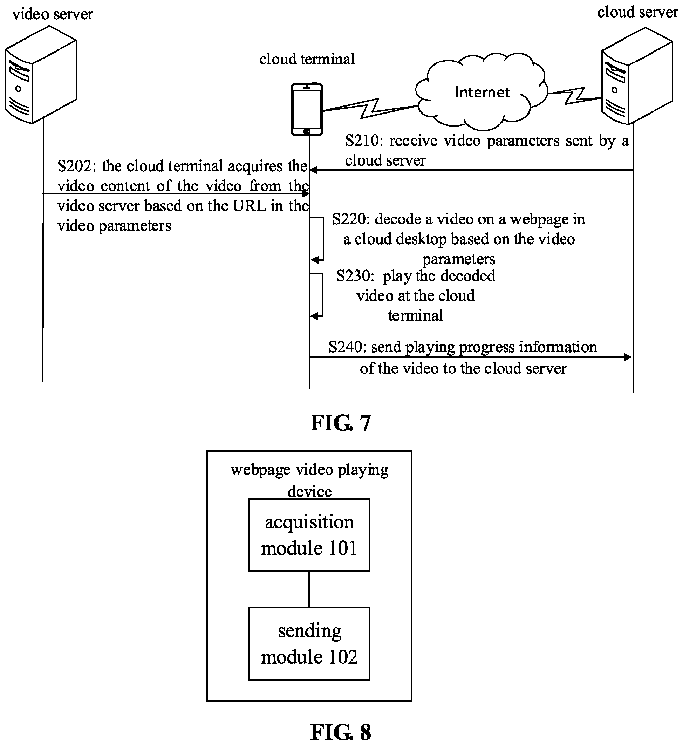

In other embodiments, as shown in FIG. 7, the method further includes a step as follows:
At S202, the cloud terminal acquires the video content of the video from the video server based on the URL in the second video parameters. The cloud terminal requests the video content directly from the video server, so that there is no need for the cloud server to consume bandwidths and cache space to send and cache the video content, thus further reducing the overhead of cloud services.

In some embodiments, the method further includes:
area parameters of a first display area playing pseudo image frame in a cloud server are received, wherein the pseudo image frame is a blank frame.

S230 may include a step as follows:
the video is displayed in a second display area in the cloud desktop based on the area parameters.

In this embodiment, the cloud server will send the area parameters of the first display area to the cloud terminal, and the cloud terminal may determine the location of the second display area displayed locally based on the parameters of the first area, so as to display the video decoded by itself in the second display area.

If the cloud terminal directly displays the cloud desktop playing the pseudo image frames as shown in , and if the cloud terminal overlays and plays the video on the webpage on the cloud desktop, the playing effect is as shown in . In this embodiment, the first display area and the second display area overlap locally at the cloud terminal.

In some embodiments, as shown in FIG. 6 or FIG. 7, the method further includes:
At S240, playing progress information of the video is sent to the cloud server, wherein the playing progress information is used for the cloud server to control the playing progress of the pseudo video frames.

If the video is played at the cloud terminal at a default playing speed, and there are no operations such as pause, fast forward and rewind, the pseudo video frames in the cloud server may play the pseudo video at the default playing speed, and the synchronous playing of the cloud terminal and the cloud server may be maintained without acquiring the playing progress information. However, in this embodiment, the cloud terminal will report the playing progress information to the cloud server to control the playing progress of the pseudo video frames in case of a failure in synchronous playing.

In some embodiments, the video parameters received by the cloud terminal also include video control information, so that the user can directly control the playing of the video on the cloud terminal. If the video is decoded and played by the cloud server, the cloud terminal only operates a user input and transfers the user input to the cloud server, and finally the cloud server controls the playing progress of the video. In this embodiment, the cloud terminal acquires video control information from the video parameters received, and will, after acquiring the user input, control the playing progress of the video based on a control code in the video control information, so as to adjust the playing progress of the video. If the playing progress is adjusted, it is necessary to report the playing progress to the cloud server for the cloud server to control the playing progress of the pseudo image frames.

In this embodiment, if the cloud terminal requests the video content from the video server by itself, it will also receive predetermined information containing authentication information from the cloud server. When requesting the video content of the video on the webpage from the video server, the cloud terminal will send an access request containing the authentication information, so as to facilitate the video server to perform authentication. After the authentication is qualified, the cloud terminal may request the video content of the video successfully.

As shown in FIG. 8, a webpage video playing device applied to a cloud server is provided in this embodiment, which includes:
an acquisition module 101 configured to acquire video parameters of a video on a webpage; and
a sending module 102 configured to send the video parameters to a cloud terminal, wherein the video parameters are used for the cloud terminal to decode and play the video.

In this embodiment, both the acquisition unit and the sending unit may be program modules which, after being executed by the processor, may acquire video parameters and send them to the processor. After sending the video parameters to the cloud terminal, the cloud terminal decodes and plays the video on the webpage, and transfer the load of the cloud server decoding the video, thus reducing the consumption of resources in the cloud server.

In some embodiments, the acquisition module 101 may be configured to receive a Uniform Resource Locator (URL) of the video on the webpage from a browser by using a Source with a video parsing function such as an HTML5 de-encapsulation component, and parse the URL to obtain the video parameters.

In this embodiment, the HTML5 de-encapsulation component may be a component specially developed using HTML5, and the de-encapsulation component with a video decoding function may also be a component with a video decoding ability developed by webpage language. The de-encapsulation component with a video decoding function can interact with the browser to obtain the URL of the video on the webpage and parse the URL to obtain the video parameters. The video parameters may be obtained by parsing the URL. The URL may contain various video parameters, such as file parameters and stream parameters. In some embodiments, some video parameters may also be requested from the video server by the HTML5 de-encapsulation component.

In some embodiments, the device further includes:
a blocking module configured to block the loading of a default de-encapsulation component of the browser;
a loading module configured to load the de-encapsulation component with a video decoding function, such as the HTML5 de-encapsulation component;

The acquisition module 101 is configured to receive the URL of the video on the webpage from the browser after the HTML5 de-encapsulation component is loaded.

The blocking module is configured to monitor a registry interface of the browser, and to intercept a first read request for first registry information when the registry interface receives the first read request, wherein the first registry information is registry information of the default de-encapsulation component. The blocking module may be an integral part of the BHO component. The device also includes an interception module which may be an integral part of the BHO component and may be configured to intercept the first read request and load the HTML5 de-encapsulation component when the registry interface receives the first read request from the browser to load the de-encapsulation component. Alternatively, the device further includes a modification module configured to modify the first read request into a second read request to read the second registry information from the registry.

In some embodiments, the blocking module is configured to modify the first registry information in the registry into the second registry information, wherein the first registry information is the registry information of the default de-encapsulation component of the browser, and the second registry information is the registry information of the HTML5 de-encapsulation component. The loading module is configured to receive the second registry information read from the registry, and to load the HTML5 de-encapsulation component based on the second registry information.

In some embodiments, the device further includes:
a construction module which may be an integral part of the HTML5 de-encapsulation component and may be configured to play pseudo video frame in a cloud desktop of the cloud server, wherein the pseudo video frame is a blank frame in which no video content is loaded.
the construction module which may be configured to create a playing object according to the video parameters; and
a playing module configured to construct the pseudo video frames based on the playing object.

In some embodiments, the construction module may be configured to construct an image object in a predetermined image format, an audio object in a predetermined audio format, and to construct pseudo image frames based on the image object, and pseudo audio frames based on the audio object.

The playing module may also be configured to render the image frames and display the pseudo image frames, and to render and play the audio frames.

In some embodiments, the device further includes:
The area parameter acquisition module 101, which may also be configured to acquire the area parameters of a first display area playing the pseudo video frames in the cloud desktop. The sending module 102 is further configured to send the area parameters to the cloud terminal, wherein the area parameters are used for the cloud terminal to play the video in a second display area corresponding to the first display area, and the second display area overlays the first display area.

In some embodiments, the device further includes a receiving module configured to receive playing progress information reported by the cloud terminal, and a control module configured to control the playing progress of the pseudo video frames in the cloud desktop based on the playing progress information.

The data acquisition module 101 may also be configured to acquire the video content of the video on the webpage.

The sending module 102 may also be configured to send the video content to the cloud terminal, wherein the video parameters are used for the cloud terminal to decode and output the video.

In some embodiments, the video parameters include the URL of the video, and the URL is used for the cloud terminal to request the video content of the video from the video server of the video.

The device also includes:
a determination module configured to determine whether to perform the transfer of video decoding based on a predetermined strategy.

The sending module 102 may also be configured to send the video parameters to the cloud terminal if the predetermined strategy determines to perform the transfer of video decoding.

In some embodiments, the determination module is at least configured to perform at least one of the following steps of: determining whether the URL of the video is a preset URL, and if so, determining to perform the transfer of video decoding; determining whether a playing duration of the video reaches a preset playing duration, and if so, determining to perform the transfer of video decoding.

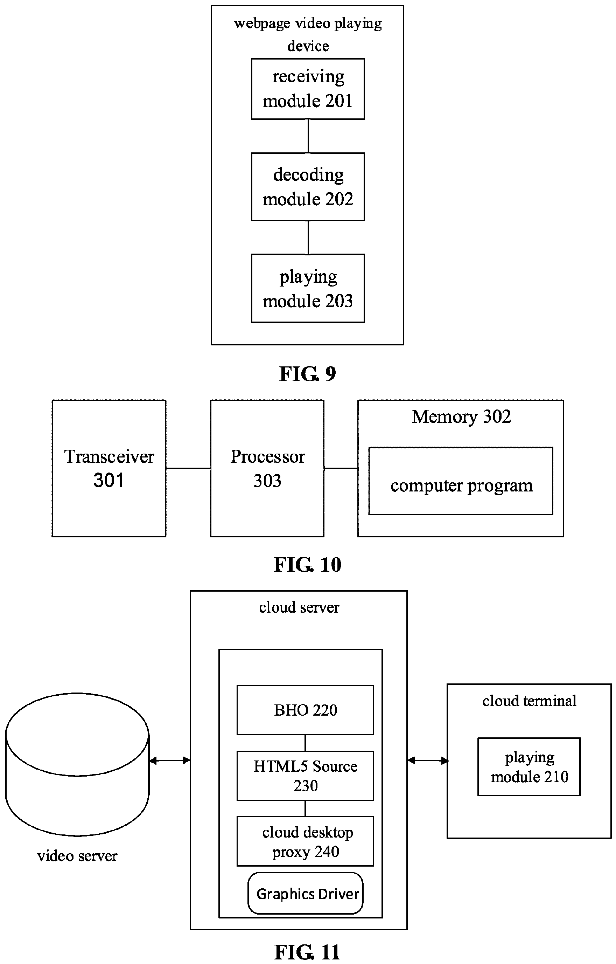

As shown in FIG. 9, a webpage video playing device applied to a cloud terminal is provided in this embodiment, which includes:
a receiving module 201 which may be configured to receive video parameters from a cloud server;
a decoding module 202 which may be configured to decode a video on a webpage in a cloud desktop according to the video parameters; and
a playing module 203 which may be configured to play the decoded video at the cloud terminal.

The receiving module 201, the decoding module 202 and the playing module 203 may all be program modules, and the processor can receive the video parameters, decode radio frequency on the webpage and play the decoded video through the execution of these program modules.

In some embodiments, the device further includes:
a receiving module 201, which may be configured to receive the video content of the video from the cloud server, or acquire the video content of the video from the video server based on a Uniform Resource Locator (URL) in the video parameters;
a receiving module 201, which may also be configured to receive area parameters of a first display area playing pseudo image frame in a cloud server, wherein the pseudo image frame is a blank frame; and
a playing module 203, which may also be configured to display the video in a second display area in the cloud desktop based on the area parameters.

In some embodiments, the device further includes a sending module configured to send playing progress information of the video to the cloud server, wherein the playing progress information is used for the cloud server to control the playing progress of the pseudo video frames.

The receiving module 201 may also be configured to receive predetermined information from the cloud server, wherein the predetermined information at least contains authentication information for acquiring the video.

As shown in FIG. 10, an electronic apparatus is provided in this embodiment, which includes a transceiver 301, a memory 302, a processor 303, and a computer program which is stored in the memory 302 and executed by the processor 303.

The processor is connected to the transceiver and the memory for implementing the webpage video playing method provided in one or more of the above embodiments by executing the computer program, for example, one or more of the webpage video playing methods shown in FIGS. 1 to 2, 5 to 7 and 12 to 16.

In this embodiment, the transceiver 301 may correspond to a network interface, which may correspond to a wireless interface such as an antenna, or to a wired interface of a cable or optical cable.

The memory 302 may include various types of storage media which may be used for data storage. In this embodiment, at least some of the storage media included in the memory 302 are nonvolatile storage media, which may be used to store the computer program.

The processor 303 may include a Centre Processer Unit (CPU), a microprocessor, a digital signal processor, an application processor, an application-specific integrated circuit or a programmable array, etc., which may be configured to determine the quality of a cell signal by executing the computer program.

In this embodiment, the processor 303 may be connected to the transceiver 330 and the memory 302 through an inter integrated circuit bus and other in-device buses.

The electronic apparatus may be the aforementioned cloud server or cloud terminal.

In this embodiment, a computer storage medium storing a computer program is provided. After the computer program is executed, the webpage video playing method provided in one or more of the above embodiments is implemented, for example, one or more of the webpage video playing methods shown in FIGS. 1 to 2, 5 to 7 and 12 to 16.

The computer storage medium provided in the embodiment of the present application includes mobile storage devices, ROM (Read-Only Memory), RAM (Random Access Memory), magnetic disks or optical disks, and other media that can store program codes. Optionally, the computer storage medium may be a non-transient storage medium. The non-transient storage medium herein may also be called non-volatile storage medium.

A few specific examples will be provided with reference to any of the above embodiments.

### Example 1:

As shown in FIG. 11, a webpage video playing system is provided in this example, which includes:
a cloud server for running a BHO component 220, an HTML5 de-encapsulation (Source) component 230 and a cloud desktop proxy 240.

The BHO component is configured to monitor a registry interface of a browser running in the cloud server. The browser searches a decoded de-encapsulation component when plays an HTML5 video. When reading the decoded Source information of the video, IE replaces the registry information of its original default Source with the registry information of HTML5 de-encapsulation component, and then loads the HTML5 de-encapsulation component instead of the default Source.

### 1. HTML5 Source

HTML5 Source can acquire the URL, file information, stream information, video control information, video data and audio content of video files, cache and send these data to a cloud desktop client, and create pseudo video and audio content.

### 2. Cloud desktop proxy

The cloud desktop proxy is mainly responsible for forwarding data.

A module below is added to the cloud desktop.

A playing module 210 receives multimedia data from the cloud desktop proxy, initializes video and audio decoding information, and is responsible for decoding and playing videos.

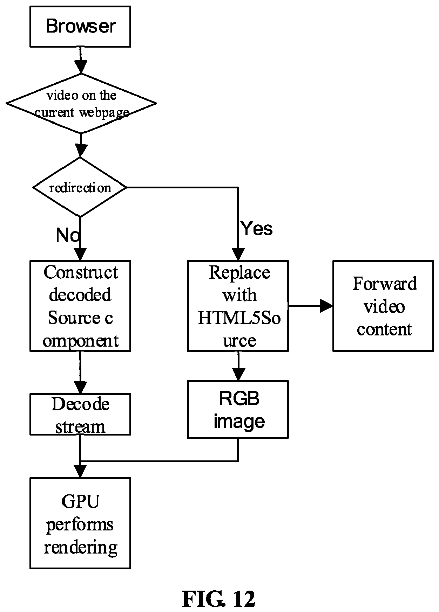

As shown in FIG. 12, when displaying a webpage, the browser in the cloud desktop run by one or more virtual machines in the cloud server determines whether there is a video on the current webpage. The video may be an HTML5 video directly embedded in the webpage. For example, the browser may determine whether there is a video tag on the webpage.

The BHO component in the browser determines whether to follow a redirection process based on the strategy or nor, if so, processes c, d, and e will be followed, and if not, processes f, g and h will be followed. The redirection herein is equivalent to the above transfer of video decoding.
a. If the browser follows the redirection process, its own Source component will be replaced by the HTML5 Source component.
b. The HTML5 Source component forwards real video information or URL, and forges RGB images.
c. The browser directly renders RGB images.
d. The browser loads the Source component of IE for decoding.
e. The video is decoded.
f. Graphic Processing Unit (GPU) performs rendering.

### Example 2:

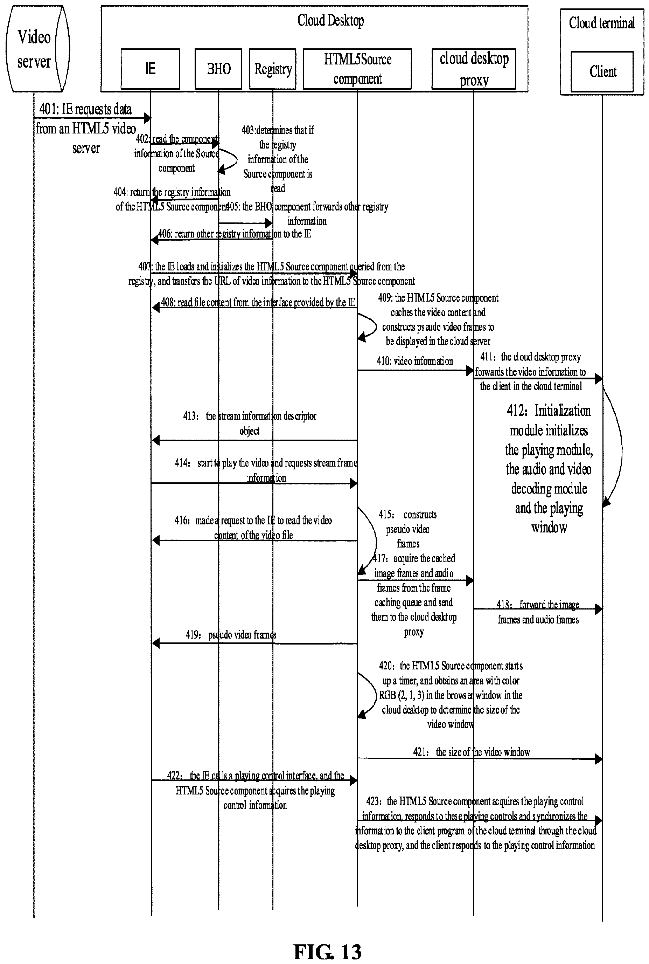

As shown in FIG. 13, a webpage video playing method is provided in this example, which includes.

At 401, IE requests data from an HTML5 video server.

At 402, after IE detects that an HTML5 video tag (<video>) is included in webpage tag, it will read the registry information of the Source component from the registry to parse the video file, and the registration information read is intercepted by the BHO component.

At 403, the BHO component determines that if the registry information of the Source component is read, it proceeds to step 404, and if other registry information is read, it proceeds to step 405.

At 404, the BHO component directly returns the registry information of the HTML5 Source component and proceeds to step 407.

At 405, the BHO component forwards other registry information.

At 406, the BHO component returns other registry information to the IE.

At 407, the IE loads and initializes the HTML5 Source component queried from the registry, and transfers the URL of video information to the HTML5 Source component. The video information may at least include the aforementioned video parameters, for example, first video parameters or second video parameters.

At 408, the HTML5 Source component reads file contents, such as the aforementioned video content, from the interface provided by the IE.

At 409, the HTML5 Source component caches the video content and constructs pseudo video frames to be displayed in the cloud server. The specific steps may be as follows:
A: the file parameters, stream parameters, image content and audio content are analyzed and cached;
B: an MEDIATYPE object is created to set SubType of the video as MEDIASUBTYPE_RGB (other types may be allowed, and the browser of RGB video information will perform rendering directly without decoding or wasting resources);
C: an MEDIATYPE object is created to set SubType of the audio object as MEDIASUBTYPE_PCM (other types may be allowed, and the IE of PCM audio information will perform rendering directly without decoding or wasting resources); and
D: a stream information descriptor object is constructed and the audio content and the image content of the video are cached.

At 410, the HTML5 Source component transfers audio content and image content cached in 409, video parameters and other video information to the cloud desktop proxy through TCP connection (similarly, other interprocess communications may be allowed).

At 411, the cloud desktop proxy forwards the video information to the client in the cloud terminal.

At 412, after receiving the information sent in 411, the cloud desktop client program initializes the playing module, the audio and video decoding module and the playing window.

At 413, the IE will acquire the stream information descriptor object constructed in 409 from the HTML5 Source component.

At 414, after receiving video stream description and other information, the IE starts to play the video and requests stream frame information.

At 415, after receiving the obtained startup information and frame information request, the HTML5 Source component constructs pseudo video frames, and the specific steps may be as follows:
A: whether the frame data in the cache queue exists or not is determined, and if not, it proceeds to step 416 to read the video file data;
B: the complete frames are parsed from the read file data and adding the frames to the cache queue;
C: the RGB (2, 1, 3) (which may be other special colors easy to contrast) image frames are forged based on the width and height of the frames cached in 409; and
D: the PCM audio frames are forged based on the audio content.

At 416, if the cache queue of the frames is insufficient in step 415, a request will be made to the IE to read the video content of the video file.

At 417, the HTML5 Source component acquires the cached image frames and audio frames from the frame caching queue and sends them to the cloud desktop proxy.

At 418, the cloud desktop proxy forwards the image frames and audio frames in step 417 to the client, and the client plays the decoded video based on the received image frames and audio frames.

At 419, the HTML5 Source component returns a request result in 414, and sends the pseudo video frames of RGB and PCM forged in 415 to IE so that IE can display the frames directly in the cloud server.

Steps 414 to 419 form a cycle process until the video is played out.

At 420, the HTML5 Source component starts up a timer, and obtains an area with color RGB (2, 1, 3) in the browser window in the cloud desktop to determine the size of the video window.

At 421, the HTML5 Source component synchronizes the size of the video window obtained in 420 to the client program of the cloud terminal through the cloud desktop proxy. When the client program receives the size of the video window and the blocking situation, the video window size for the client blocks the RGB (2, 1, 3) area in the cloud desktop.

At 422, the IE calls a playing control interface, and the HTML5 Source component acquires the playing control information.

At 423, the HTML5 Source component acquires the playing control information, responds to these playing controls and synchronizes the information to the client program of the cloud terminal through the cloud desktop proxy, and the client responds to the playing control information.

### Example 3:

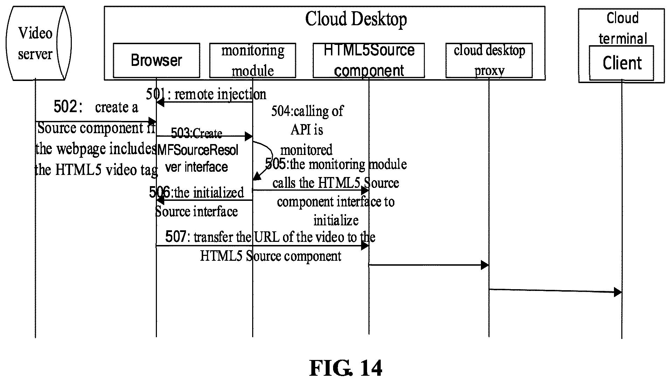

Taking Firefox/Google browser as an example, a webpage video playing method is provided. The specific implementation process may be shown in Figure 14. Compared with IE, the specific implementation of Firefox/Google is mainly different in the process of loading the HTML5 Source component. A BHO (Browser Helper Object) component is unique to the IE, and a new program monitoring module is added. In this example, the cloud terminal network communicates with the cloud desktop network, and the cloud terminal is not required to access the public network, which is disclosed as follows.

At 501, if the monitoring module monitors that Firefox/Google browser injects Dynamic Link Library (DLL) into Firefox/Google browser by remote injection during start-up, Firefox/Google monitoring module will replace MFCreateSourceResolverAPI and Creat with HOOK technology.

At 502, Firefox/Google browser requests the video server, and will create a Source component if the webpage includes the HTML5 video tag.

At 503, Firefox/Google browser calls MFCreateSourceResolver API to create an IMFSourceResolver interface.

At 504, calling of API and MFCreateSourceResolver (the default de-encapsulation component of the browser) is monitored by the monitoring module.

At 505, the monitoring module calls the HTML5 Source component interface to initialize.

At 506, the monitoring module returns the initialized Source interface which may be an interface between the HTML Source component and the browser.

At 507, Firefox/Google calls the Source interface and transfers the URL of the video to the HTML5 Source component. Refer to steps 408 to 423 in FIG. 13 for subsequent steps.

### Example 4:

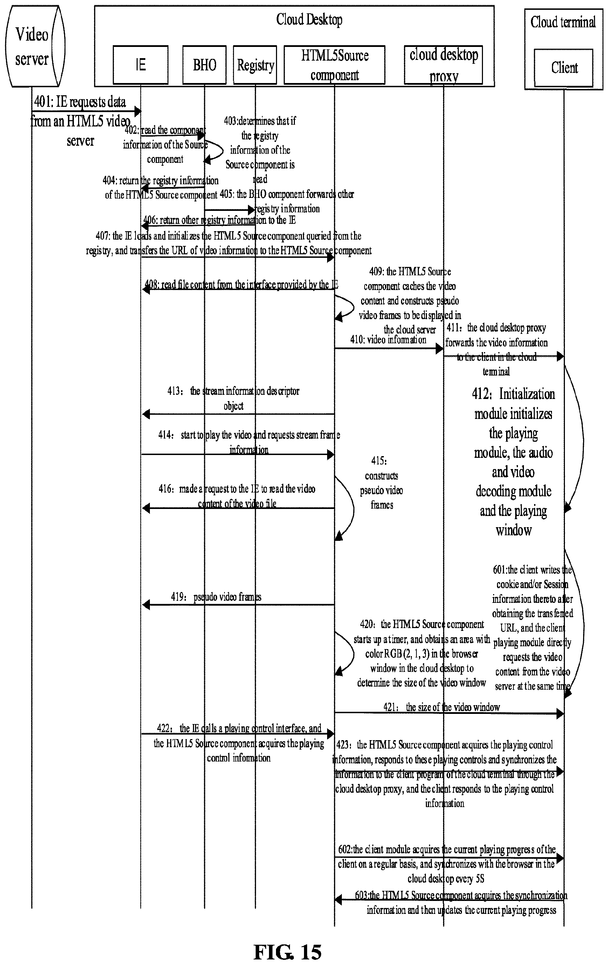

HTML5 Source component directly acquires the URL and transfers it to the client playing module. Compared with Example 3, it requires the network intercommunication between the cloud terminal network and the cloud desktop as well as the cloud terminal to access the public network, as shown in FIG. 15, which specifically includes the following.

At 410, the information transferred from the HTML5 Source component is not video information but the URL of the video, and contains Cookie and/or Session information such as video VIP.

Additionally, at 601, the client writes the cookie and/or Session information thereto after obtaining the transferred URL, and the client playing module directly requests the video content from the video server at the same time.

Steps 417 and 418 in FIG. 13 are omitted.

Additionally at 602, the client module acquires the current playing progress of the client on a regular basis, and synchronizes with the browser in the cloud desktop every 5S. Synchronization of the playing progress is performed according to a predetermined time interval, which is 5S in this example, but may be 10S and other durations in specific implementation.

Additionally 603, the HTML5 Source component acquires the synchronization information and then updates the current playing progress.

### Example 5:

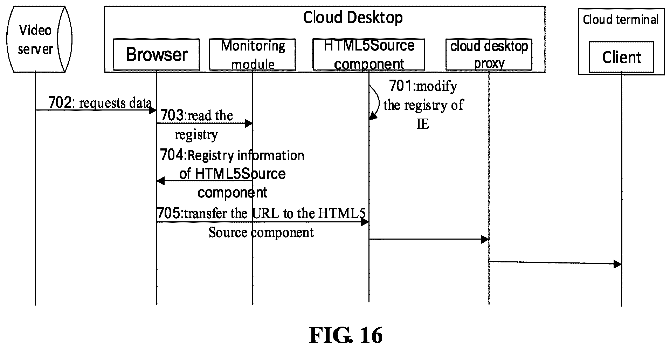

As shown in FIG. 16 which is a flow chart of the IE in Example 3, the main difference is the absence of a BHO component and a forwarding module, described as follows:
At 701, the HTML5 Source component directly modifies the registry of the IE browser to modify the registry information of the default de-encapsulation component in the registry into its registry information.

At 702, the IE requests data from the HTML5 video server.

At 703, after the IE detects that the tag includes an HTML5 <video> tag, it will read the Source information from the registry to parse the video file, and read the registration information.

At 704, the information of the HTML5 Source component is returned.

At 705, the IE loads and initializes the HTML5 Source component queried from the registry, and transfers the URL of the media to the HTML5 Source component. Refer to steps 408 to 423 in FIG. 13 for subsequent steps.

### Example 5:

In this example based on Example 3, the information transferred from the HTML5 Source component is not video information but the URL of the video, and contains Cookie and Session information such as video VIP. For example, upon receipt of the URL, the cloud terminal will send a response to the cloud server informing the cloud server that it has obtained the URL and will request the video content from the cloud server. Further, the cloud terminal will further report to the cloud server the status information of the video content requested from the video server, the status information may include: whether the video is successfully requested or not.

Additional step: The client writes the cookie information thereto after acquiring the transferred URL, and the client playing module directly requests the video content from the video server at the same time.

Steps 417 and 418 of acquiring the image frames and the audio frames from the cloud server are omitted in FIG. 13.

Additional step: The client module acquires the current playing progress of the client on a regular basis, and synchronizes with the browser in the cloud desktop every 5S.

Additional step: The HTML5 Source component updates the current playing progress after acquiring the synchronization information.

Compared with the prior art, the webpage video playing method provided by the embodiment of the present application uses the default de-encapsulation component of the browser of the cloud server to de-encapsulate and decode the video on the webpage, and has the advantages as follows.
1) The method of acquiring <video> and other video content of HTML5 on the webpage does not rely on the Web page itself or traversing the tag, but is realized by acquiring the file URL within the IE browser without any need to couple with the video page, so that the maintenance cost is low.
2) This video processing method is suitable for all HTML5-based video websites, browsers (such as Firefox/Google) that adopt the same playing mode as the IE browser, and has good universality.
3) Decoding videos at the cloud terminal can greatly alleviate CPU and memory resources in the cloud desktop and greatly improve video definition.

In summary, an HTML5 webpage video processing method based on a cloud desktop environment is proposed in this example. This method can effectively meet the requirements of the use of a cloud desktop in the field of HTML5 video, save user resources and meet user requirements. Meanwhile, the maintenance cost is low because of no need to couple with the video website pages, which is a highlight function with great characteristics. It's a great example of how to promote the field of cloud desktop.

It should be understood that the apparatus and method disclosed in several embodiments provided in the present application may also be implemented in other ways. The embodiments of the apparatus described above are merely exemplary embodiments. For example, the division of the units, which is only the division of logical functions, may be implemented in other ways in practice, e.g., a plurality of units or components may be combined or integrated in another system, or certain features may be omitted or not implemented. In addition, the mutual coupling or direct coupling or communication connection between the components illustrated or discussed herein may be indirect coupling or communication connection between the apparatuses or units through some interfaces, and may also be electrical, mechanical or connection in other forms.

The abovementioned units described as separate parts may or may not be physically separated, and parts displayed as units may or may not be physical units, and namely may be located in the same place, or may also be distributed to a plurality of network units. Part or all of the units may be selected to achieve the purpose of the schemes of the present embodiment according to a practical requirement.

In addition, each function unit in each embodiment of the present application may be integrated into a processing unit, each unit may also exist independently, and two or more than two units may also be integrated into a unit. The abovementioned integrated unit may be implemented in a hardware form, and may also be implemented in form of hardware and software function unit.

A person of ordinary skill in the art should know that: all or part of the steps of the abovementioned method embodiment may be implemented by instructing related hardware through a program, the abovementioned program may be stored in a computer-readable storage medium, and the program is executed to execute the steps of the abovementioned method embodiment; and the abovementioned storage medium includes: various media capable of storing program codes such as mobile storage equipment, a Read-Only Memory (ROM), a Random Access Memory (RAM), a magnetic disk or an optical disk.

The above is only the implementation manner of the present application and not intended to limit the scope of protection of the present application, and any variations or replacements apparent to those skilled in the art within the technical scope disclosed by the present application shall fall within the scope of protection of the present application. Therefore, the scope of protection of the present application shall be subject to the scope of protection of the claims.

## Claims

1. A webpage video playing method applied to a cloud server, comprising:
acquiring a video parameter of a video on a webpage; and
sending the video parameter to a cloud terminal, wherein the video parameter is used for the cloud terminal to decode and play the video.

2. The method according to claim 1, wherein
acquiring a video parameter of a video on a webpage comprises:
receiving a Uniform Resource Locator, URL, of the video on the webpage from a browser by using a standard de-encapsulation component with a video parsing function; and
parsing the URL to obtain a first video parameter.

3. The method according to claim 2, wherein
the de-encapsulation component with the video parsing function comprises a generalized markup language HTML5 component.

4. The method according to claim 2,
further comprising:
blocking the loading of a default de-encapsulation component of the browser; and
loading the de-encapsulation component with the video parsing function, wherein
receiving a Uniform Resource Locator, URL, of the video on the webpage from a browser by using a de-encapsulation component with a video parsing function comprises:
receiving the URL from the browser after loading the de-encapsulation component with the video parsing function.

5. The method according to claim 4, wherein:
blocking the loading of a default de-encapsulation component of the browser comprises:
monitoring a registry interface of the browser;
intercepting a first read request of first registry information in response to the registry interface receiving the first read request for the first registry information, wherein the first registry information is registry information of the default de-encapsulation component;
loading the de-encapsulation component with a video parsing function comprises:
returning second registry information of the de-encapsulation component with the video parsing function to the browser in response to the first read request being intercepted; or, modifying the first read request into a second read request for reading the second registry information from the registry.

6. The method according to claim 4, wherein
blocking the loading of a default de-encapsulation component of the browser comprises:
modifying the first registry information in the registry into the second registry information, wherein the first registry information is registry information of the default de-encapsulation component of the browser, and the second registry information is registry information of the de-encapsulation component with the video parsing function; and
loading the de-encapsulation component with a video parsing function comprises:
receiving the second registry information read from the registry; and
loading the de-encapsulation component with the video parsing function based on the second registry information.

7. The method according to claim 1, further comprising:
playing a pseudo video frame in a cloud desktop of the cloud server, wherein the pseudo video frame is frame in which no video content is loaded.

8. The method according to claim 7, further comprising the following steps of:
creating a playing object based on the video parameter; and
constructing the pseudo video frame based on the playing object.

9. The method according to claim 8, wherein:
creating a playing object based on the video parameter comprises:
creating an image object in a predetermined image format;
creating an audio object in a predetermined audio format;
constructing the pseudo video frame based on the playing object comprises:
constructing pseudo image frame based on the image object; and
constructing pseudo audio frame based on the audio object;
constructing the pseudo video frame based on the playing object comprises:
rendering the image frame and displaying the pseudo image frame; and
rendering and playing the pseudo audio frame.

10. The method according to claim 7, further comprising:
acquiring area parameters of a first display area playing the pseudo video frame in the cloud desktop; and
sending the area parameters to the cloud terminal, wherein the area parameters are used for the cloud terminal to play the video in a second display area corresponding to the first display area, and the second display area overlays the first display area.

11. The method according to claim 7, further comprising:
receiving playing progress information reported by the cloud terminal; and
controlling the playing progress of the pseudo video frame in the cloud desktop based on the playing progress information.

12. The method according to claim 1, further comprising:
acquiring video content of the video on the webpage;and
sending the video content to the cloud terminal.

13. The method according to claim 1, wherein
the video parameter is a second video parameter, and the second video comprises the URL of the video, the URL is used for the cloud terminal to request the video content of the video from the video server of the video.

14. The method according to claim 13, further comprising:
sending the predetermined information to the cloud terminal, wherein the predetermined information at least contains authentication information for acquiring the video.

15. The method according to claim 1, further comprising:
determining whether to perform a transfer of video decoding based on a predetermined strategy;
sending the video parameter to a cloud terminal comprises:
sending the video parameter to the cloud terminal in response to determining to perform the transfer of video decoding based on the predetermined strategy.

16. The method according to claim 15, wherein
determining whether to perform a transfer of video decoding based on a predetermined strategy comprises at least one of following steps of:
determining whether the URL of the video is a preset URL, and in response to the URL of the video being a preset URL, determining to perform the transfer of video decoding; and
determining whether a playing duration of the video reaches a preset playing duration, and in response to the playing duration of the video reaching a preset playing duration, determining to perform the transfer of video decoding.

17. A webpage video playing method applied to a cloud terminal, comprising:
receiving a video parameter sent by a cloud server;
decoding a video on a webpage in a cloud desktop based on the video parameter; and
playing the decoded video at the cloud terminal.

18. The method according to claim 17, further comprising:
receiving video content of the video from the cloud server;
or
requesting the video content of the video from a video server based on a Uniform Resource Locator, URL, in a received second video parameter;

19. The method according to claim 18,
further comprising:
receiving area parameters of a first display area playing pseudo image frame in a cloud server, wherein the pseudo image frame is blank frame;
playing the decoded video at the cloud terminal comprises:
displaying the video in a second display area in the cloud desktop based on the area parameters.

20. The method according to claim 19, further comprising:
sending playing progress information of the video to the cloud server, wherein the playing progress information is used for the cloud server to control the playing progress of the pseudo video frame.

21. The method according to claim 19, further comprising:
receiving predetermined information sent by the cloud server, wherein the predetermined information at least contains authentication information for acquiring the video.

22. A webpage video playing device applied to a cloud server, comprising:
an acquisition module configured to acquire a video parameter of a video on a webpage;
a sending module configured to send the video parameter to a cloud terminal, wherein the video parameter is used for the cloud terminal to decode and play the video.

23. A webpage video playing device applied to a cloud terminal, comprising:
a receiving module configured to receive a video parameter from a cloud server;
a decoding module configured to decode a video on a webpage in a cloud desktop based on the video parameter; and
a playing module configured to play the decoded video at the cloud terminal.

24. An electronic apparatus, comprising: a transceiver, a memory, a processor, and a computer program which is stored in the memory and executed by the processor, wherein
the processor is connected to the transceiver and the memory for performing the webpage video playing method provided in any one of claims 1 to 16 or 17 to 21 by executing the computer program.

25. A computer storage medium storing a computer program, wherein the webpage video playing provided in any one of claims 1 to 16 or 17 to 21 is performed after the computer program is executed.
